# EUROPÄISCHE PATENTANMELDUNG

(11) **EP 3 422 535 A1**
(43) Veröffentlichungstag der Anmeldung: **02.01.2019**
(21) Anmeldenummer: 17179073.6
(22) Anmeldetag: 30.06.2017
(51) Int. Cl.: H02K 3/12, H02K 15/00

(54) **FORMSPULENWICKLUNG FÜR EINEN STATOR EINER ELEKTRISCHEN ROTIERENDEN MASCHINE**

(71) Anmelder: Siemens Aktiengesellschaft, 80333 München (DE)
(72) Erfinder: Centner, Matthias, 10555 Berlin (DE); Sabelfeld, Ilja, 10119 Berlin (DE); Strüver, Sebastian, 10585 Berlin (DE)

(57) **Zusammenfassung**

Die Erfindung betrifft eine Formspulenwicklung (4) für einen Stator (10) einer elektrischen rotierenden Maschine (2). Um unterschiedliche Windungszahlen für einen Teil der Formspulen (22, 22a, 22b) der Formspulenwicklung (4) zu ermöglichen, wird vorgeschlagen, dass die Formspulenwicklung (4) als Zweischichtwicklung ausgebildet ist und eine Mehrzahl von Formspulen (22, 22a, 22b) mit jeweils einer Oberlage (32) und einer Unterlage (34) umfasst, wobei die Formspulen (22, 22a, 22b) zwei Nutabschnitte (28) und zwei Wickelkopfabschnitte (30) aufweisen und wobei die Oberlage (32) und die Unterlage (34) in den Wickelkopfabschnitten (30) jeweils mittels einer ersten ebenen Biegung (38) radial nach außen gekröpft sind.

## Beschreibung

Die Erfindung betrifft eine Formspulenwicklung für einen Stator einer elektrischen rotierenden Maschine.

Ferner betrifft die Erfindung einen Stator für eine elektrische rotierende Maschine mit mindestens einer derartigen Formspulenwicklung.

Die Erfindung betrifft darüber hinaus eine elektrische rotierende Maschine mit mindestens einem derartigen Stator.

Überdies betrifft die Erfindung ein Verfahren zur Herstellung einer Formspulenwicklung für einen Stator einer elektrischen rotierenden Maschine.

Derartige Formspulenwicklungen werden bevorzugt in großen elektrischen rotierenden Maschinen, insbesondere in großen Motoren und Generatoren, die mit einer Leistung von mindestens einem Megawatt betreibbar sind, eingesetzt. Bei großen elektrischen Maschinen besteht oftmals die Schwierigkeit, eine passende Spulenwindungszahl bei der elektrischen Auslegung zu finden, da aufgrund des hohen magnetischen Flusses der großen Maschinen und einer begrenzten Statorspannung häufig nur sehr kleine Windungszahlen möglich sind. Insbesondere bei sehr niedrigen Windungszahlen bedeuten Windungszahlsprünge große Veränderungen des magnetischen Flusses. Zu hohe oder zu niedrige magnetische Sättigungen mit hohen Verlusten sind die Folge. Eine Möglichkeit ist, die Länge der Maschine anzupassen. Häufig ist es erforderlich, die Maschine zu verlängern, was zu einer Vergrößerung des benötigten Bauraums führt.

Durch die Verwendung in von in Reihe geschalteter Spulen unterschiedlicher Windungszahl Umfangsrichtung wechselnder Windungszahlen lässt sich, insbesondere im niedrigen Windungszahlbereich, eine feinere Abstufung einer spannungshaltenden Windungszahl realisieren, ohne die Maschine unnötig in ihren Abmessungen zu verändern. Eine spannungshaltende Windungszahl ist die Summe der Windungszahlen aller in Reihe geschalteter Spulen. Mit konventionell ausgeführten Formspulen ist ein Statorwicklungssystem mit abwechselnden Windungszahlen nicht realisierbar, da die Schenkelhöhe der Formspulen abhängig von der Windungszahl ist. Für unterschiedliche Windungszahlen würden sich ungleich große Spulenschenkel ergeben, welche bei einer konventionellen Ausführung der Formspulen, beispielsweise im Bereich von Kreuzungspunkten, zu einer Kollision im Wickelkopf führen würde.

Die Patentschrift DE 10 2012 103 941 B4 beschreibt ein Verfahren zur Herstellung einer Wechselstromwicklung für eine rotierende elektrische Maschine aus Runddrähten mit einer Träufel- oder Einziehwicklung, welche in einem Drahtdurchmesser und in einer Windungszahl variierbar ist.

Die Patentschrift DE 10 2009 036 034 B4 beschreibt eine elektrische Maschine, umfassend einen Stator, der Nuten zur Aufnahme von Spulen einer Zahnspulenwicklung umfasst, und einen relativ zum Stator beweglichen Rotor. Eine erste Spule in einer ersten Nut weist eine erste Windungszahl auf, eine erste Spule in einer zweiten Nut weist eine zweite Windungszahl auf, die von der ersten Windungszahl der ersten Spule verschieden ist, eine zweite Spule in der ersten Nut weist eine erste Windungszahl auf und eine zweite Spule in der zweiten Nut weist eine zweite Windungszahl auf, die von der ersten Windungszahl der zweiten Spule verschieden ist. Die Gesamtzahl der Windungen in der ersten Nut ist verschieden von der Gesamtzahl der Windungen in der zweiten Nut.

Der Erfindung liegt die Aufgabe zugrunde, eine Formspulenwicklung für einen Stator einer elektrischen rotierenden Maschine anzugeben, welche unterschiedliche Windungszahlen für einen Teil der Formspulen der Formspulenwicklung ermöglicht.

Die Aufgabe wird erfindungsgemäß durch eine Formspulenwicklung für einen Stator einer elektrischen rotierenden Maschine gelöst, welche als Zweischichtwicklung ausgebildet ist und eine Mehrzahl von Formspulen mit jeweils einer Oberlage und einer Unterlage umfasst, wobei die Formspulen zwei Nutabschnitte und zwei Wickelkopfabschnitte aufweisen und wobei die Oberlage und die Unterlage in den Wickelkopfabschnitten jeweils mittels einer ersten ebenen Biegung radial nach außen gekröpft sind.

Ferner wird die Aufgabe erfindungsgemäß durch einen Stator für eine elektrische rotierende Maschine mit mindestens einer derartigen Formspulenwicklung gelöst.

Darüber hinaus wird die Aufgabe erfindungsgemäß durch eine elektrische rotierende Maschine mit mindestens einem derartigen Stator gelöst.

Überdies wird die Aufgabe erfindungsgemäß durch ein Verfahren zur Herstellung einer Formspulenwicklung für einen Stator einer elektrischen rotierenden Maschine gelöst, welche als Zweischichtwicklung ausgebildet ist und eine Mehrzahl von Formspulen mit jeweils eine Oberlage und eine Unterlage umfasst, wobei die Formspulen zwei Nutabschnitte und zwei Wickelkopfabschnitte aufweisen, wobei die Oberlage und die Unterlage im Bereich der Wickelkopfabschnitte jeweils mittels einer ersten ebenen Biegung, insbesondere unter einem Winkel von 80° bis 90°, radial nach außen gekröpft werden.

Die in Bezug auf die Formspulenwicklung nachstehend angeführten Vorteile und bevorzugten Ausgestaltungen lassen sich sinngemäß auf den Stator, die elektrische rotierende Maschine und das Herstellungsverfahren übertragen.

Der Erfindung liegt die Überlegung zugrunde, eine Statorwicklung für eine elektrische rotierende Maschine, die insbesondere mit einer Leistung von mindestens einem Megawatt betreibbar ist, anzugeben, für welche der magnetische Fluss der Statorwicklung, insbesondere bei sehr niedrigen Windungszahlen, flexibel skalierbar ist, ohne die axiale Länge der Maschine verändern zu müssen. Eine sehr niedrige maximale Windungszahl ist beispielsweise 8. Es werden Formspulen für die elektrische rotierende Maschine verwendet, die in einer Zweischichtwicklung angeordnet sind. Eine Zweischichtwicklung ist vorteilhaft, da durch sie, im Vergleich zu einer Einschichtwicklung, ein höherer Wicklungsfaktor, geringere Wicklungsverluste und ein kleinerer Oberwellengehalt erreicht werden. Um die axiale Länge der Maschine nicht verändern zu müssen, sollen die am Umfang verteilt angeordneten Formspulen mit beispielsweise wechselnden Windungszahlen verwendet werden, durch die sich eine feinere Abstufung der spannungshaltenden Windungszahl realisieren lässt. Da die Schenkelhöhe der Unterlage und Oberlage mit der Windungszahl variiert, würden die Spulen unterschiedlicher Windungszahlen in der üblichen Ausführung ohne die radiale Abkröpfung an den Enden der Nutseite im Wickelkopf, beispielsweise im Bereich von Kreuzungspunkten, kollidieren. Um derartige Kollisionen zu vermeiden, werden die Lagen der Formspulen jeweils mittels einer ersten ebenen Biegung radial nach außen gekröpft. Ein weiterer Vorteil einer ebenen Biegung ist, dass die Spulengeometrie einfacher ist und kostengünstiger herstellbar ist. Ein weiterer Vorteil eines senkrecht abgekröpften Wickelkopfes ist, dass der Stator gegenüber der herkömmlichen Ausführung kürzer ist.

In einer bevorzugten Ausgestaltung sind die Oberlage und die Unterlage unter einem Winkel von 80° bis 90° radial nach außen gekröpft. Um eine Kollision von Spulen unterschiedlicher Windungszahlen in den Wickelköpfen, insbesondere an Kreuzungspunkten, zu vermeiden, werden die Lagen mit einer ebenen Biegung im Wesentlichen senkrecht nach außen gekröpft. Zusätzlich wird durch das sehr steile Abkröpfen eine Wickelkopfausladung der Formspulenwicklung verringert.

In einer weiteren vorteilhaften Ausführungsform bilden die Oberlage und die Unterlage nach der Kröpfung jeweils eine gegenläufige zweite ebene Biegung in Umfangsrichtung aus. Der weitere Verlauf der Lagen wird beispielswiese in Form einer Evolvente, eines Kreisbogens, einer Gerade oder einer Freiformlinie ausgestaltet. Durch eine derartige Gestaltung des Wickelkopfs entsteht ein im Wesentlichen konstanter Abstand benachbarter Spulenstirnseiten zueinander.

Besonders vorteilhaft sind die Oberlage und die Unterlage der jeweiligen Formspulen mit einem Schrittwinkel von höchstens 60° versetzt angeordnet. Insbesondere bei hochpoligen Maschinen mit mindestens 8 Polen, insbesondere mit 32 oder 72 Polen, ist ein derartiger Schrittwinkel zu überbrücken. Durch einen derartigen Schrittwinkel ist der Außendurchmesser der Formspulenwicklung im Bereich der Wickelköpfe gering und die Wicklung ist ohne Veränderungen am Ständerblechpaket montierbar. Da mit steigender Polpaarzahl der Schrittwinkel kleiner wird, wird die Wicklungsmontage insbesondere für derartige Formspulen erheblich erleichtert.

In einer bevorzugten Ausgestaltung weist mindestens eine erste Formspule eine erste Windungszahl auf, wobei mindestens eine zweite Formspule eine zweite Windungszahl aufweist, welche von der ersten Windungszahl der ersten Formspule verschieden ist. Durch die Verwendung von Formspulen mit unterschiedlichen Windungszahlen, liegen beispielsweise zwei Spulennutseiten unterschiedlicher Windungszahl innerhalb einer Nut. Aus der Reihenschaltung dieser Spulen unterschiedlicher Windungszahl ergeben sich feinere Abstufungsmöglichkeiten der spannungshaltenden Windungszahl, als es aus der Reihenschaltung von Spulen gleicher Windungszahl möglich wäre. Da, insbesondere bei sehr niedrigen Windungszahlen, Windungszahlsprünge große Veränderungen des magnetischen Flusses bedeuten und zu hohe oder zu niedrige magnetische Sättigungen zu hohen Verlusten führen, führt die Verwendung von Formspulen mit unterschiedlichen Windungszahlen zu geringeren Verlusten im Stator.

Besonders vorteilhaft sind die erste Formspule und die zweite Formspule alternierend angeordnet. Eine derartige Anordnung führt zu einer symmetrischen Feldverteilung.

Vorteilhaft bilden jeweils eine Oberlage einer ersten Formspule und eine Unterlage einer zweiten Formspule eine Nutfüllung. Durch eine derartige Anordnung der Formspulen werden ein hoher Wicklungsfaktor, geringere Wicklungsverluste und ein kleinerer Oberwellengehalt erreicht.

In einer bevorzugten Ausgestaltung ist die Summe der Windungszahlen jeder Nutfüllung gleich. Insbesondere wird erreicht, dass die Summe der Windungszahlen jeder Nutfüllung gleich ist, wenn ein Muster so verteilt ist, dass eine Musterlänge höchstens gleich einer Spulenweite ist. Ein Muster ist eine Abfolge der Lagen unterschiedlicher Windungszahlen in aufeinanderfolgenden Nutfüllungen, wobei eine Musterlänge ein Betrag einer Länge der sich wiederholenden Abfolge von Lagen unterschiedlicher Windungszahlen ist. Beispielsweise weist eine erste Nutfüllung eine Oberlage mit 5 Windungen und eine Unterlage mit 4 Windungen auf, während eine zweite Nutfüllung eine Oberlage mit 4 Windungen und eine Unterlage mit 5 Windungen aufweist. Die Summe der Windungszahlen einer Nutfüllung ist dann immer 9 während die Musterlänge 2 beträgt. Ist die Summe der Windungszahlen jeder Nutfüllung gleich, wird eine optimale Nutfüllung erreicht.

In einer weiteren vorteilhaften Ausführungsform ist ein Verhältnis der Windungszahlen zueinander nicht ganzzahlig und/oder ein Betrag einer Differenz der Windungszahlen gleich 1. Beispielsweise ist das Verhältnis der Windungszahlen zueinander 3:2, 4:3 oder 5:4. Durch ein derartiges Verhältnis der Windungszahlen ist vorteilhaft eine optimal feine Abstufung der spannungshaltenden Windungszahl realisierbar.

Im Folgenden wird die Erfindung anhand der in den Figuren dargestellten Ausführungsbeispiele näher beschrieben und erläutert.

Es zeigen:
- FIG 1: einen Längsschnitt einer elektrischen rotierenden Maschine mit einer Formspulenwicklung,
- FIG 2: einen vergrößerten Querschnitt eines Stators mit einer Formspulenwicklung,
- FIG 3: eine perspektivische Darstellung einer Formspule einer Formspulenwicklung,
- FIG 4: eine perspektivische Darstellung von Formspulen einer Formspulenwicklung mit unterschiedlichen Windungszahlen und
- FIG 5: eine perspektivische Darstellung einer Formspulenwicklung mit Formspulen unterschiedlicher Windungszahlen.

Gleiche Bezugszeichen haben in den verschiedenen Figuren die gleiche Bedeutung.

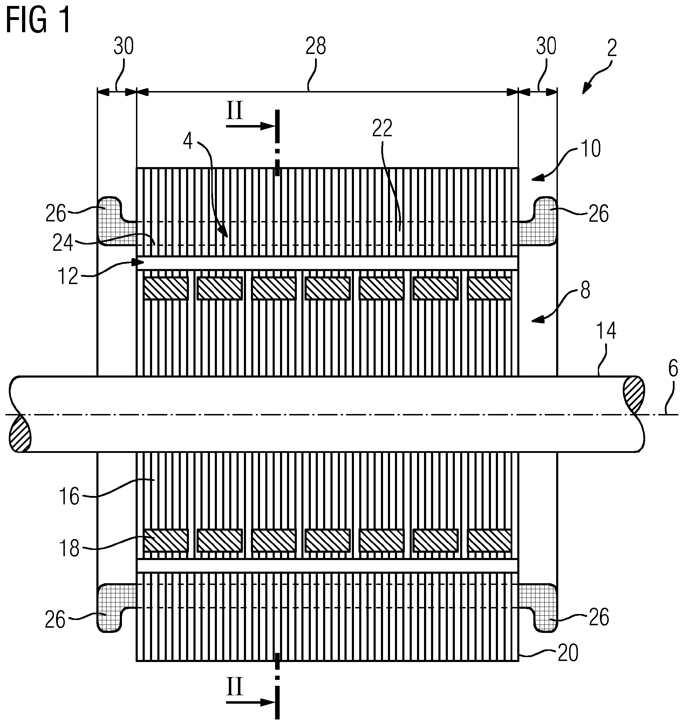

FIG 1 zeigt einen Längsschnitt einer elektrischen rotierenden Maschine 2 mit einer Formspulenwicklung 4. Die elektrische rotierende Maschine 2 weist einen um eine Rotationsachse 6 rotierbaren Rotor 8 und einen den Rotor 8 umgebenden Stator 10 auf, wobei sich zwischen dem Rotor 8 und dem Stator 10 ein Spalt 12, der insbesondere als Luftspalt ausgeführt ist, befindet. Die Rotationsachse 6 definiert eine Axialrichtung, eine Radialrichtung und eine Umfangsrichtung. Der Rotor 8 umfasst eine Welle 14 und ein Rotorblechpaket 16, in dem exemplarisch Permanentmagnete 18 angeordnet sind. Alternativ weist der Rotor 8 eine Erregerwicklung oder einen Kurzschlusskäfig auf. Die elektrische rotierende Maschine 2 weist mindestens acht magnetische Pole auf. Der Stator 10 umfasst ein Statorblechpaket 20 mit der Formspulenwicklung 4, welche eine Mehrzahl von Formspulen 22 umfasst. Die Formspulen 22 der Formspulenwicklung 4 verlaufen in Nuten 24 in Axialrichtung durch das Statorblechpaket 20 und bilden an den axialen Enden des Statorblechpakets 20 Wickelköpfe 24 aus. Die Bereiche der Formspulen 22, die sich innerhalb der Nuten 24 des Statorblechpakets 20 befinden, werden als Nutabschnitte 28 bezeichnet. Die Bereiche der Formspulen 22, die sich außerhalb der Nuten 24 des Statorblechpakets 20 befinden, werden als Wickelkopfabschnitte 30 bezeichnet.

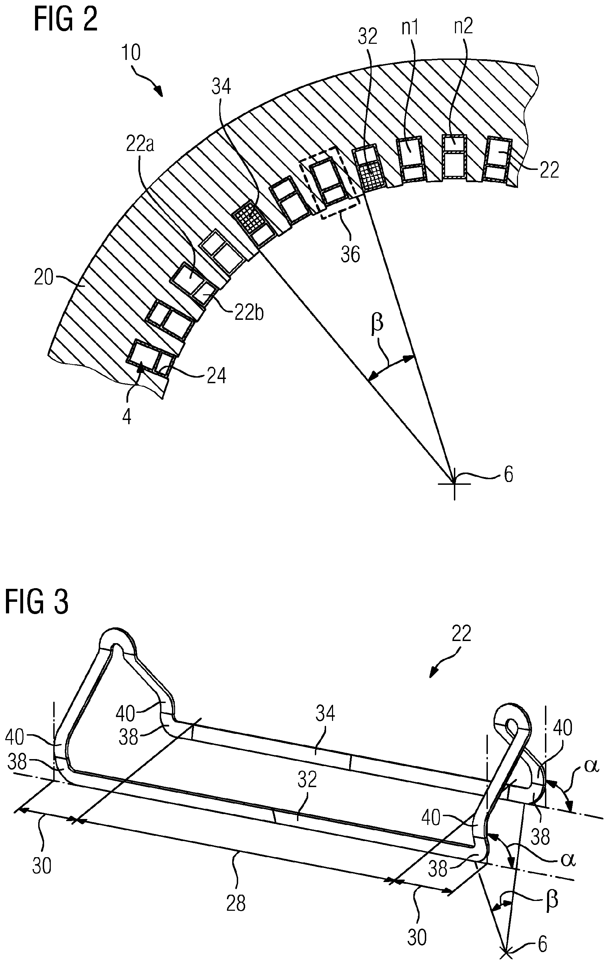

FIG 2 zeigt einen vergrößerten Querschnitt eines Stators 10 mit einer Formspulenwicklung 4, welche in ein Statorblechpaket 20 eingelegt ist. Die Formspulenwicklung 4 ist als gesehnte Zweischichtwicklung ausgebildet und umfasst eine Mehrzahl von Formspulen 22 mit jeweils einer Oberlage 32 und einer Unterlage 34. Die Formspulen 22 der Formspulenwicklung 4 sind in Nuten 24 des Statorblechpakets 20 angeordnet, wobei jeweils die Oberlage 32 und Unterlage 34 einer Formspule 22 unter einem Schrittwinkel β versetzt zueinander angeordnet ist. Der Schrittwinkel β beträgt insbesondere maximal 60°. Eine Spulenweite beträgt in FIG 2 exemplarische 4 Nuten. In jeder der Nuten 24 ist eine Lage 32, 34 einer ersten Formspule 22a mit einer ersten Windungszahl n1 und eine Lage 34, 32 einer zweiten Formspule 22b mit einer zweiten Windungszahl n2 angeordnet. Die Lage 32, 34 der ersten Formspule und die Lage 34, 32 der zweiten Formspule 22b bilden eine Nutfüllung 36. Insbesondere ist die erste Windungszahl n1 größer als die zweite Windungszahl n2. Ein Verhältnis der Windungszahlen n1, n2 zueinander ist nicht ganzzahlig und ein Betrag einer Differenz der Windungszahlen n1, n2 ist gleich 1. Beispielsweise ist das Verhältnis der Windungszahlen n1, n2 zueinander 3:2, 4:3 oder 5:4. Die Formspulen 22a, 22b sind in den Nuten 24 alternierend angeordnet, sodass sich sowohl in einem Nutgrund als auch in einem Nutkopf der Nuten 24 Lagen 32, 34 von Formspulen 22a, 22b mit Windungszahl n1 und Windungszahl n2 abwechseln. Die Summe der Windungszahlen n1, n2 jeder Nut 24 ist gleich. In FIG 2 ist eine Musterlänge gleich 2, wobei ein Muster eine Abfolge von Lagen 32, 34 unterschiedlicher Windungszahlen n1, n2 in aufeinanderfolgenden Nuten 24 ist und wobei eine Musterlänge ein Betrag einer Länge der sich wiederholenden Abfolge von Lagen 32, 34 unterschiedlicher Windungszahlen n1, n2 ist. Das Muster aus dem Nutgrund wiederholt sich im Nutkopf nach der Spulenweite von 4 Nuten. Die weitere Ausführung der Formspulenwicklung 4 entspricht der Ausführung in FIG 1.

FIG 3 zeigt eine perspektivische Darstellung einer Formspule 22 einer Formspulenwicklung 4, wobei die Formspulenwicklung 4 als Zweischichtwicklung ausgeführt ist. Daher weist die Formspule 22 eine Oberlage 32 und eine Unterlage 34 auf, die, wie in FIG 2 zu sehen, in den Nuten 24 des Statorblechpakets 20 angeordnet sind. Das Statorblechpaket 20 ist aus Gründen der Übersichtlichkeit in FIG 3 nicht dargestellt. Der Bereich der Formspule 22, der sich innerhalb des Statorblechpakets 20 befindet, wird Nutabschnitt 28 genannt. Die Teile der Formspule 22, die sich außerhalb des Statorblechpakets 20 befinden, werden Wickelkopfabschnitte 30 genannt. Die Oberlage 32 und die Unterlage 34 der Formspule 22 bilden einen Schrittwinkel β von insbesondere maximal 60° aus. Nach dem Austritt aus dem Statorblechpaket 20 sind die Lagen 32, 34 in den Wickelkopfabschnitten jeweils unter einem Winkel α von 80° bis 90° in einer ebenen Biegung 38 radial nach außen gekröpft, um eine Kollision von Lagen 32, 34 mit unterschiedlichen Windungszahlen n1, n2 im Wickelkopf 26 zu verhindern. Hierbei ist eine der beiden Lagen 32, 34 beidseitig vor der ersten ebenen Biegung 38 länger als der andere, sodass die Formspule 22, bei Vernachlässigung der Spulenableitungen, wesentlich symmetrisch bezüglich einer durch eine axiale Mitte des Statorblechpakets 20 verlaufende Querschnittsfläche ist. Durch das starke Abkröpfen der Lagen 32, 34 nach dem Nutaustritt und die ebene Biegung 38 wird erreicht, dass sich aufgrund unterschiedlicher Windungszahlen n1, n2 und damit verbundenen unterschiedlich hohen Lagen 32, 34 diese sich im Wickelkopfabschnitt 30 nicht berühren. Die weitere Ausführung der Formspule 22 entspricht der Ausführung in FIG 2.

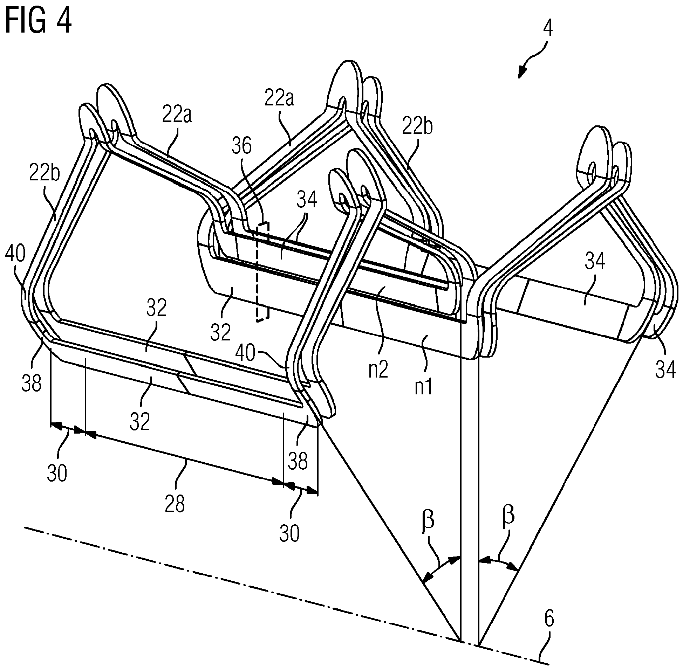

FIG 4 zeigt eine perspektivische Darstellung von Formspulen 22a, 22b einer Formspulenwicklung 4 mit unterschiedlichen Windungszahlen n1, n2. Wie in FIG 2 zu sehen, bilden zwei Lagen 32, 34 unterschiedlicher Formspulen 22a, 22b eine Nutfüllung 36, wobei sich die Formspulen 22a, 22b insbesondere durch ihre Windungszahl n1, n2 unterscheiden. Die erste Windungszahl n1 der ersten Formspule 22a ist größer als die zweite Windungszahl n2 der zweiten Formspule 22b. Die Formspulen 22a, 22b sind alternierend angeordnet, sodass sich sowohl im Nutgrund als auch zum Nutkopf Lagen 32, 34 von Formspulen 22a, 22b mit Windungszahl n1 und Windungszahl n2 abwechseln. Die Summe der Windungszahlen n1, n2 in jeder Nutfüllung 36 ist gleich. Die weitere Ausführung der Formspulen 22 entspricht der Ausführung in FIG 3.

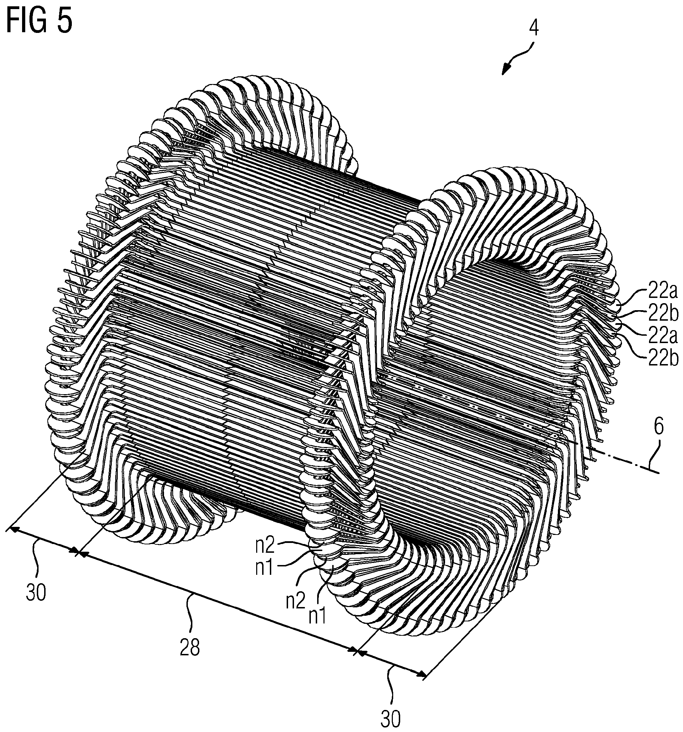

FIG 5 zeigt eine perspektivische Darstellung einer Formspulenwicklung 4 mit Formspulen 22a, 22b unterschiedlicher Windungszahlen n1, n2. Exemplarisch zwei Sätze von Formspulen 22a, 22b werden abwechselnd in Umfangsrichtung angeordnet. Durch die Anordnung von Formspulen 22a, 22b mit unterschiedlichen Windungszahlen n1, n2 ergeben sich im Mittel nichtganzzahlige Windungszahlen, wodurch die spannungshaltende Windungszahl feiner gestuft werden kann. Die weitere Ausführung der Formspulenwicklung 4 entspricht der Ausführung in FIG 4.

Zusammenfassend betrifft die Erfindung eine Formspulenwicklung 4 für einen Stator 10 einer elektrischen rotierenden Maschine 2. Um unterschiedliche Windungszahlen für einen Teil der Formspulen 22, 22a, 22b der Formspulenwicklung 4 zu ermöglichen, wird vorgeschlagen, dass die Formspulenwicklung 4 als Zweischichtwicklung ausgebildet ist und eine Mehrzahl von Formspulen 22, 22a, 22b mit jeweils einer Oberlage 32 und einer Unterlage 34 umfasst, wobei die Formspulen 22, 22a, 22b zwei Nutabschnitte 28 und zwei Wickelkopfabschnitte 30 aufweisen und wobei die Oberlage 32 und die Unterlage 34 in den Wickelkopfabschnitten 30 jeweils mittels einer ersten ebenen Biegung 38 radial nach außen gekröpft sind.

## Patentansprüche

1. Formspulenwicklung (4) für einen Stator (10) einer elektrischen rotierenden Maschine (2),
welche als Zweischichtwicklung ausgebildet ist und eine Mehrzahl von Formspulen (22, 22a, 22b) mit jeweils einer Oberlage (32) und einer Unterlage (34) umfasst,
wobei die Formspulen (22, 22a, 22b) zwei Nutabschnitte (28) und zwei Wickelkopfabschnitte (30) aufweisen und
wobei die Oberlage (32) und die Unterlage (34) in den Wickelkopfabschnitten (30) jeweils mittels einer ersten ebenen Biegung (38) radial nach außen gekröpft sind.

2. Formspulenwicklung (4) nach Anspruch 1,
wobei die Oberlage (32) und die Unterlage (34) unter einem Winkel (α) von 80° bis 90° radial nach außen gekröpft sind.

3. Formspulenwicklung (4) nach Anspruch 2,
wobei die Oberlage (32) und die Unterlage (34) nach der Kröpfung jeweils eine gegenläufige zweite ebene Biegung (40) in Umfangsrichtung ausbilden.

4. Formspulenwicklung (4) nach einem der vorherigen Ansprüche,
wobei die Oberlage (32) und die Unterlage (34) der jeweiligen Formspulen (22, 22a, 22b) mit einem Schrittwinkel (β) von höchstens 60° versetzt angeordnet sind.

5. Formspulenwicklung (4) nach einem der vorherigen Ansprüche,
wobei mindestens eine erste Formspule (22a) eine erste Windungszahl (n1) aufweist,
wobei mindestens eine zweite Formspule (22b) eine zweite Windungszahl (n2) aufweist, welche von der ersten Windungszahl (n1) der ersten Formspule (22a) verschieden ist.

6. Formspulenwicklung (4) nach Anspruch 5,
wobei die erste Formspule (22a) und die zweite Formspule (22b) alternierend angeordnet sind.

7. Formspulenwicklung (4) nach einem der Ansprüche 5 oder 6,
wobei jeweils eine Oberlage (32) einer ersten Formspule (22a) und eine Unterlage (34) einer zweiten Formspule (22b) eine Nutfüllung (36) bilden.

8. Formspulenwicklung (4) nach Anspruch 7,
wobei die Summe der Windungszahlen (n1, n2) jeder Nutfüllung (36) gleich ist.

9. Formspulenwicklung (4) nach einem der Ansprüche 5 bis 8,
wobei ein Verhältnis der Windungszahlen (n1, n2) zueinander nicht ganzzahlig ist und/oder ein Betrag einer Differenz der Windungszahlen (n1, n2) gleich 1 ist.

10. Stator (10) für eine elektrische rotierende Maschine (2) mit mindestens einer Formspulenwicklung (4) nach einem der Ansprüche 1 bis 9.

11. Elektrische rotierende Maschine (2), insbesondere Turbogenerator, mit mindestens einem Stator (10) nach Anspruch 10.

12. Elektrische rotierende Maschine (2) nach Anspruch 11,
welche mindestens achtpolig ausgeführt ist.

13. Verfahren zur Herstellung einer Formspulenwicklung (4) für einen Stator (10) einer elektrischen rotierenden Maschine (2),
welche als Zweischichtwicklung ausgebildet ist und eine Mehrzahl von Formspulen (22, 22a, 22b) mit jeweils eine Oberlage (32) und eine Unterlage (34) umfasst,
wobei die Formspulen (22, 22a, 22b) zwei Nutabschnitte (28) und zwei Wickelkopfabschnitte (30) aufweisen,
wobei die Oberlage (32) und die Unterlage (34) im Bereich der Wickelkopfabschnitte (30) jeweils mittels einer ersten ebenen Biegung (38), insbesondere unter einem Winkel (α) von 80° bis 90°, radial nach außen gekröpft werden.

14. Verfahren nach Anspruch 13,
wobei die Oberlage (32) und die Unterlage (34) nach der Kröpfung jeweils in einer zweiten ebenen Biegung (40) gegenläufig in Umfangsrichtung gebogen werden.

15. Verfahren nach einem der Ansprüche 13 oder 14,
wobei mindestens eine erste Formspule (22a) eine erste Windungszahl (n1) aufweist,
wobei mindestens eine zweite Formspule (22b) eine zweite Windungszahl (n2) aufweist, welche von der ersten Windungszahl (n1) der ersten Formspule (22a) verschieden ist,
die erste Formspule (22a) und die zweite Formspule (22b) alternierend angeordnet werden.
